# EUROPÄISCHE PATENTANMELDUNG

(11) **EP 1 061 279 A2**
(43) Veröffentlichungstag der Anmeldung: **20.12.2000**
(21) Anmeldenummer: 00109395.4
(22) Anmeldetag: 03.05.2000
(51) Int. Cl.: F16D 13/64

(54) **Wellen-Naben-Verbindung**

(30) Priorität: 17.06.1999 DE 19927622
(71) Anmelder: Bayerische Motoren Werke Aktiengesellschaft, 80809 München (DE)
(72) Erfinder: Kröger, Werner, 85764 Oberschleissheim (DE); Kirschner, Martin, 80939 München (DE)

(57) **Zusammenfassung**

Es wird eine Wellen-Neben-Verbindung einer trennbaren Reibungskupplung, insbesondere im Antriebsstrang eines Kraftfahrzeuges beschrieben. Dabei soll einmal verhindert werden, daß die Keilnutenverzahnung zwischen Kupplungsscheibe und Getriebeantriebswelle durch Partikeln der umgebenden Kupplungsteile verschmutzt und damit die Funktion der Kupplung beeinträchtigt wird. Zum anderen soll sich Schmierfett der Keilverzahnung nicht durch Abschleudern auf die Kupplungsbeläge niederschlagen. Erreicht wird dies mit einer als Abdekkung dienenden Hülse im Bereich der Kupplungsnabe.

## Beschreibung

Die Erfindung bezieht sich auf eine Wellen-Naben-Verbindung einer trennbaren Reibungskupplung, insbesondere im Antriebsstrang eines Kraftfahrzeuges, wie sie im Oberbegriff des Hauptanspruchs beschrieben ist.

### [Stand der Technik]

Bei herkömmlichen Reibungskupplungen kann sich im Betrieb das Trennverhalten der Kupplung verschlechtern, verbunden mit einer Erhöhung der Schaltkräfte. Ursache hierfür sind eindringende Partikel, die die axiale Beweglichkeit der Kupplungsscheibe auf der Getriebeantriebswelle behindern. Bei den Partikeln handelt es sich um Verschleißprodukte bzw. Abrieb der benachbarten Bauteile der Reibungskupplung. Die Partikel legen sich auf die Keilverzahnung der Wellen-Naben-Verbindung und vermischen sich mit dem dort zur Schmierung dienenden Fett. Darüber hinaus können auch schädliche chemische Reaktionen zwischen dem Schmierfett und diesen Partikeln auftreten. Die Folge von alledem ist eine Verklumpung des Fettes und damit eine Verschlechterung der Schmierung, die zu der bereits erwähnten Beeinträchtigung der axialen Beweglichkeit der Kupplungsscheibe führt.

Andererseits besteht die Gefahr, daß dieses Schmierfett von der Wellen-Naben-Verbindung abgeschleudert wird und auf die Kupplungsbeläge gelangt. Dies wiederum bewirkt das bekannte Kupplungsrupfen, das allgemein als eine Komfortbeeinträchtigung empfunden wird.

### [Aufgabe der Erfindung]

Aufgabe der Erfindung ist es, eine gattungsgemäße Wellen-Naben-Verbindung so weiterzubilden, daß die geschilderten Beeinträchtigungen der axialen Verschiebbarkeit der Kupplungsscheibe sowie das Ablagern von Schmierfett auf den Reibflächen der Kupplungsscheibe weitgehend verhindert wird.

Die Aufgabe wird erfindungsgemäß mit dem kennzeichnenden Merkmalen des Anspruchs 1 gelöst. Weitere Ausgestaltungen der Erfindung ergeben sich aus den Unteransprüchen.

Nach der Erfindung ist demnach im Wellen-Naben-Bereich eine Abdeckung vorgesehen, die sowohl das Eindringen von Verschleißpartikeln verhindert, als auch ein Austreten von abgeschleudertem Fett unterbindet. Durch entsprechende Ausgestaltung der Abdeckung kann eine Labyrinthdichtung dargestellt werden, die darüber hinaus die Luftströmung günstig beeinflußt.

In einer bevorzugten Ausführung ist die Abdeckung als Hülse, zweckmäßigerweise aus Kunststoff, ausgelegt. Dadurch läßt sich einerseits die erfindungsgemäße Maßnahme kostengünstig realisieren, andererseits ist eine einfache Austauschbarkeit gegeben.

### [Beispiele]

Weitere vorteilhafte Ausgestaltungen der Erfindung ergeben sich aus der nachfolgenden Beschreibung anhand der dazugehörenden Zeichnung. Es zeigen
- Fig. 1: Teile einer Reibungskupplung, soweit sie für das Verständnis der Erfindung notwendig sind,
- Fig. 2: eine Wellen-Naben-Verbindung nach Fig. 1, in vergrößertem Maßstab und
- Fig. 3: eine ähnliche Darstellung wie in Fig. 2 einer zweiten Ausführung.

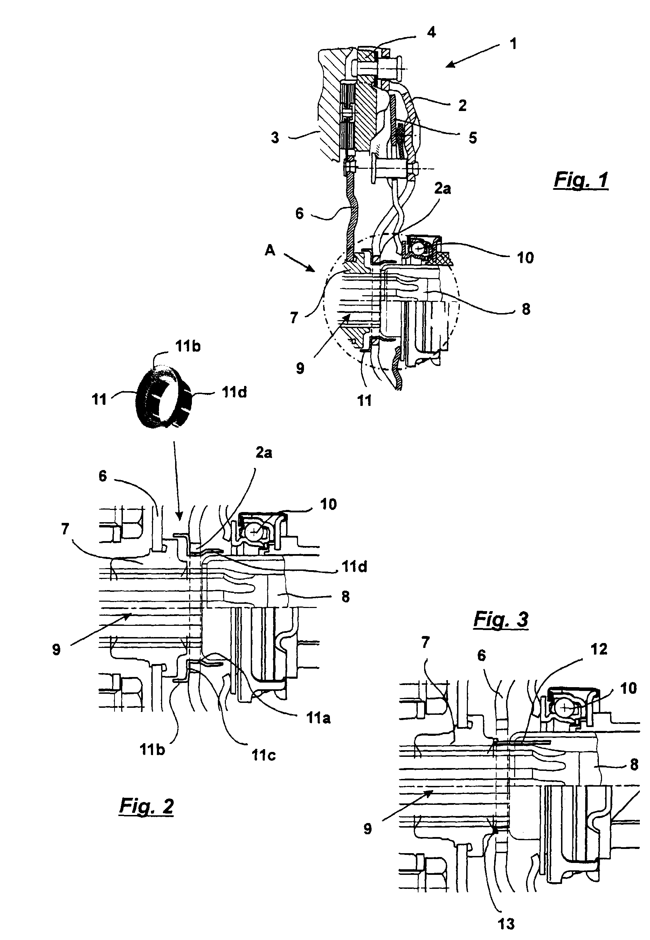

Eine trennbare Reibungskupplung 1 nach Fig. 1 ist in einem nicht näher dargestellten Antriebsstrang eines Kraftfahrzeuges angeordnet und unterbricht den Kraftfluß vom Motor zum Getriebe bei Anfahr- und Schaltungsvorgängen. Die Reibungskupplung 1 weist ein Kupplungsgehäuse 2 auf, das mit einem Schwungrad 3 verschraubt ist (nicht dargestellt). Bei dem Schwungrad 3 kann es sich um ein herkömmliches Schwungrad eines Kraftfahrzeugmotors handeln. Es kann aber auch als sogenanntes Zweimassen-Schwungrad ausgelegt sein, bei dem zwei Teilschwungräder federnd gegeneinander abgestützt sind. Für die vorliegende Erfindung ist dies jedoch unerheblich, wichtig ist lediglich, daß das Kupplungsgehäuse 2 mit vom Motor mitgedreht wird.

Drehfest, jedoch axial verschiebbar ist mit der Kupplungsgehäuse 2 eine Druckplatte 4, verbunden, die durch eine Tellerfeder 5 gegen eine Reibfläche einer Kupplungsscheibe 6 gepreßt wird. Auf der gegenüberliegenden Seite weist die Kupplungsscheibe 6 eine weitere Reibfläche auf, die durch die Tellerfeder 5 reibend an einer entsprechenden Reibfläche des Schwungrades 3 anliegt.

Die Kupplungsscheibe 6 ist fest mit einer Nabe 7 verbunden, die mit einer Innenverzahnung in Eingriff steht mit der Außenverzahnung einer Getriebeantriebswelle 8. Die sich so ergebende Wellen-Naben-Verbindung 9 ist als Keilverzahnung ausgelegt, so daß die Nabe 7 zwar drehfest auf der Getriebeantriebswelle 8 sitzt, jedoch sich in deren Achsrichtung verschieben kann. Der Vollständigkeit halber sei erwähnt, daß die Verzahnung als eine Verzahnung beliebiger Geometrie ausgelegt sein kann. In dem gezeichneten Zustand ist die Reibungskupplung geschlossen, das heißt, das Motordrehmoment wird über das Schwungrad 3, die Kupplungscheibe 6 und über die Getriebeantriebswelle 8 auf das Getriebe übertragen.

Bei Lösen der Reibungskupplung drückt ein nicht gezeichneter Stellhebel auf ein Ausrücklager 10, das wiederum die Tellerfeder 5 so beaufschlagt, daß sie sich von der Druckplatte 4 entfernt. Die Druckplatte 8 bewegt sich etwas in Achsrichtung der Getriebeantriebswelle 8 nach rechts und gibt die Kupplungsscheibe 6 frei. Auch sie bewegt sich ein wenig in die gleiche Achsrichtung und trennt den Kraftfluß zwischen Motor und Getriebe.

Teile des Kupplungsgehäuses 2 erstrecken sich radial einwärts und bildet einen Ringbund 2a, der konzentrisch die Getriebeabtriebswelle 8 mit Abstand umgibt. In diesen Ringbund 2a ist eine als Abdeckung dienende Hülse 11 geschoben. Die Form der Hülse 11 und deren Festlegung in dem Ringbund 2a zeigt Fig. 2 deutlicher.

Die Fig.2 entspricht dem in Fig. 1 mit dem Kreis A gekennzeichneten Teilausschnitt in vergrößertem Maßstab. Des weiteren zeigt Fig.2 die Hülse 11 zum besseren Verständnis neben ihrem Einbauort innerhalb der Wellen-Naben-Verbindung 9 noch, perspektivisch dargestellt, herausgezogen. Die Hülse 11 besteht aus Kunststoff und weist in ihrem Längsschnitt, also in Achsrichtung der Getriebeantriebswelle, eine gestufte Querschnittsform auf mit einem Mittenabschnitt 11a. Dessen Außendurchmesser ist auf den Innendurchmesser der Ringbundes 2a so abgestimmt, daß der Ringbund 2a die Hülse 11 entweder lose oder mit einem leichten Passitz aufnimmt.

In Richtung der Nabe 7 ragt die Hülse 11 aus dem Ringbund heraus und bildet eine Stufenabschnitt 11b mit vergrößerten Durchmesser, der die Nabe 7 im Bereich deren zum Ringbund 2a hinweisenden Stirnseite abdeckt. Durch den Stufensprung bildet der Stufenabschnitt 11b desweiteren eine Stützschulter 11c aus, die bei montierter Hülse 11 an dem Ringbund 2a anliegt. Die lichte Weite und die Längserstreckung des Stufenabschnittes 11b sind so bemessen, daß er die Axialbewegung der Nabe 4 bzw. der Kupplungscheibe 6 beim Schließen und Öffnen der Kupplung nicht behindert, jedoch in jeder Position der Kupplungsscheibe den ihm zugekehrten Abschnitt der Wellen-Naben-Verbindung 9 abdeckt.

Auf der dem Stufenabschnitt 11b abgewandten Seite ragt die Hülse 11 mit einem Federungsabschnitt 11d aus dem Ringbund 2a heraus und überdeckt die auslaufenden Keilnuten der Getriebeantriebswelle 8. Der Außendurchmesser des Federungsabschnitte 11d ist gegenüber der lichten Weite des Ringbundes 2a vergrößert und zwar in der Weise, daß sich die Hülse 11 beim Montieren mit dem Federungsabschnitt 11d durch den Ringbund drücken läßt. Durch das nachträgliche Auffedern hält der Federungsabschnitt 11d zusammen mit der sich als Widerlager an den Ringbund 2a anlegenden Stützschulter 11c die Hülse 11 fest im Ringbund 2a. Durch Freischnitte bildet der Federungsabschnitt 11d am Umfang gleichmäßig verteilte Federzungen aus.

Aufgrund ihrer Ausgestaltung und Anordnung verhindert die Hülse 11 das Eindringen von Partikeln in den Bereich der Wellen-Naben-Verbindung 9. Die Partikel können als Abrieb bspw. von der Kupplungscheibe 6, der Tellerfeder 5 oder dem mit ihr in Gleitreibung stehenden Lagerrings des Ausrücklagers 10 stammen. Anderseits hindert die Hülse 11 von der Keilverzahnung abgeschleudertes Fett daran, in den eigentlichen Kupplungsraum zu treten und sich bspw. auf die Reibflächen der Kupplungscheibe niederzuschlagen.

In Figur 3 ist eine zweite Ausführungsform der Hülse dargestellt. Die Hülse, hier mit 12 bezeichnet und ebenfalls aus Kunststoff gefertigt, ist nicht gestuft und weist an ihrer zur Nabe 4 gewandten Stirnseite einen Magnetring 13 auf, mit dem sie sich an der Nabe 4 hält. Bei der Montage der Kupplung wird die Hülse 12 zunächst über die Getriebeantriebswelle 8 geschoben und sprengt sich dann beim Zusammenbau der Kupplung in Folge der Magnetkraft an die Nabe. Dabei ist die Stärke der Magnetkraft so gewählt, daß die Hülse 12 in jedem Betriebszustand sicher gehalten wird. Durch diese Art der Anordnung folgt die Hülse 12 jeder Axialbewegung der Kupplungscheibe, insbesondere auch den sich verlagernden Wegebereichen durch Verschleiß der Kupplungsbeläge.

Anstelle des Magnetrings kann die Hülse auch an der Nabe festgeklebt oder durch einen Befestigungsclip gehalten sein. Ebenso kann für die anfängliche Fixierung bei der Montage wiederum ein Clip oder eine Fangvorrichtung vorgesehen sein, die bei der ersten Betätigung die Hülse durch Lösen oder Abreißen freigeben.

### [Bezugszeichenliste]

- 1: Reibungskupplung
- 2: Kupplungsgehäuse
- 2a: Ringbund
- 3: Schwungrad
- 4: Druckplatte
- 5: Tellerfeder
- 6: Kupplungsscheibe
- 7: Nabe
- 8: Getriebeantriebswelle
- 9: Wellen-Naben-Verbindung
- 10: Ausrücklager
- 11: Hülse
- 11a: Mittenabschnitt
- 11b: Stufenabschnitt
- 11c: Stützschulter
- 11d: Federungsabschnitt
- 12: Hülse
- 13: Magnetring

## Patentansprüche

1. Wellen-Naben-Verbindung einer trennbaren Reibungskupplung, insbesondere im Antriebsstrang eines Kraftfahrzeuges, bei der eine die Nabe aufweisende Kupplungsscheibe axial verschiebbar auf einer Getriebeantriebswelle sitzt und so die Trennung des Kraftflusses zwischen Motor und Getriebe bei Anfahr- und Schaltvorgängen ermöglicht, dadurch gekennzeichnet, daß zwischen der Wellen-Naben-Verbindung (9) und den sie umgebenden Bauteilen der Reibungskupplung (1) eine Abdeckung vorgesehen ist, die das Eindringen und das Austreten von Partikeln im Bereich der Wellen-Naben-Verbindung (9) verhindert.

2. Wellen-Naben-Verbindung nach Anspruch 1, mit einem mit dem Schwungrad des Motors umlaufenden Kupplungsgehäuse, das einen radial einwärts im Bereich der Wellen-Naben-Verbindung liegenden Ringbund aufweist, dadurch gekennzeichnet, daß die Abdeckung als Hülse (11) ausgelegt und in dem Ringbund (2a) festgelegt ist.

3. Wellen-Naben-Verbindung nach Anspruch 2, dadurch gekennzeichnet, daß die Hülse (11) über den Ringbund (2a) hinausragt, und mit dem überstehenden Abschnitt die Wellen-Naben-Verbindung (9)abdeckt.

4. Wellen-Naben-Verbindung nach Anspruch 3, bei der die Kupplungsscheibe über eine Keilverzahnung drehfest und axial verschiebbar auf der Getriebeantriebswelle sitzt, dadurch gekennzeichnet, daß die Hülse (11) in ihrem Längsschnitt eine gestufte Querschnittsform aufweist, mit einem dem Innendurchmesser des Ringbundes (2a) entsprechenden Mittenabschnitt (11a), an den sich ein aus dem Ringbund heraustretender Stufenabschnitt (11b) mit vergrößertem Durchmesser anschließt, der die Wellen-Naben-Verbindung (9) abdeckt und eine Stützschulter (11c) für das Festlegen der Hülse (11) in dem Ringbund (2a) bildet.

5. Wellen-Naben-Verbindung nach Anspruch 4, dadurch gekennzeichnet, daß der Stufenabschnitt (11d) in seiner lichten Weite und in seiner Längserstreckung so bemessen ist, daß er die Axialbewegung der Kupplungsscheibe (6) ermöglicht und in jeder axialen Position der Kupplungsscheibe (6) den dem Ringbund (2a) zugekehrten Abschnitt der Wellen-Naben-Verbindung (9) abdeckt.

6. Wellen-Naben-Verbindung nach Anspruch 5, dadurch gekennzeichnet, daß sich an den Mittenabschnitt (11a) der Hülse (11) an der dem Stufenabschnitt (11b) abgewandten Seite ein im Durchmesser gegenüber der lichten Weite des Ringbundes (2a) vergrößerter Federungsabschnitt (11d) anschließt, der beim Befestigen der Hülse (11) durch den Ringbund (2a) gedrückt wird und durch sein nachträgliches Auffedern zusammen mit der Stützschulter (11c) des Stufenabschnittes (11b) die Hülse (11) in dem Ringbund (2a) hält.

7. Wellen-Naben-Verbindung nach Anspruch 6, dadurch gekennzeichnet, daß der Federungsabschnitt (11d) durch einzelne über den Umfang angeordnete Federzungen gebildet ist.

8. Wellen-Naben-Verbindung nach Anspruch 6 oder 7, dadurch gekennzeichnet, daß die Länge des Federungsabschnittes (11d) so bemessen ist, daß er die zum Getriebe hin auslaufende Keilverzahnung der Getriebeantriebswelle (8) abdeckt.

9. Wellen-Naben-Verbindung nach Anspruch 1, bei der die Kupplungsscheibe über eine Keilverzahnung drehfest und axial verschiebbar auf der Getriebeantriebswelle sitzt, dadurch gekennzeichnet, daß die Abdeckung als Hülse (12) ausgelegt ist, die frei verschiebbar auf der Keilverzahnung der Getriebeantriebswelle (8) angeordnet und mit einer Stirnseite an der Nabe (7) der Kupplungsscheibe (6) festgelegt ist.

10. Wellen-Naben-Verbindung nach Anspruch 9, dadurch gekennzeichnet, daß die Hülse (12) über Magnetkraft an der Nabe gehalten ist.

11. Wellen-Naben-Verbindung nach Anspruch 10, dadurch gekennzeichnet, daß die Hülse (12) an ihrer Stirnseite einen als Dauermagneten ausgelegten Ring (13) trägt.

12. Wellen-Naben-Verbindung nach einem der Ansprüche 2 bis 11, dadurch gekennzeichnet, daß die Hülse (11, 12) aus Kunststoff besteht.
